# EUROPEAN PATENT SPECIFICATION

(11) **EP 2 465 356 B1**
(45) Date of publication and mention of the grant of the patent: **12.04.2017**
(21) Application number: 10015793.2
(22) Date of filing: 17.12.2010
(51) Int. Cl.: A23G 1/36, A23G 1/32

(54) **Process for making low-calorie product**
Verfahren zur Herstellung von kalorienarmen Produkten
Procédé de fabrication de produit à basse calorie

(43) Date of publication of application: 20.06.2012
(73) Proprietor: Kraft Foods R & D, Inc., Deerfield, IL 60015 (US)
(72) Inventor: Löser, Ulrich, 82054 Sauerlach (DE); Fischer, Günther, 85354 Freising (DE); Paggios, Konstantinos, 81541 München (DE); Klemmer, Helge, F., M., 51465 Bergisch Gladbach (DE); Schetzberg, Sabine, 51063 Köln (DE); Strey, Reinhard, 41540 Dormagen (DE); Seyller, Milena, 67120 Ergersheim (FR); Ullrich, Frank, 85591 Vaterstetten (DE)
(74) Representative: Wilson Gunn

(56) References cited:
- EP-A1- 0 941 666
- EP-A1- 0 986 959
- EP-A2- 0 427 544
- US-A- 5 464 649
- US-A- 5 776 536

## Description

The present invention relates to a process for producing a low-calorie confectionary product and the use of a structured liquid for reducing the calorific value of a confectionary product.

Confectionery products such as chocolates, pralines or the like are popular fat-based products. The fat content of e.g. a chocolate may vary from about 25 to about 40 weight %, depending on whether it is plain, milk or white chocolate, but it is usually from about 30 to 34% by weight, based on the total weight of the chocolate. Therefore, chocolate and other confectionery products are high calorie products. It is thus not surprising that many attempts have been made by the confectionery industry to lower the sugar, fat and calorie contents of such confectionery products.

Examples of such attempts include processing aspects, the use of sugar replacers such as polyoles and/polydextroses, the use of special fats or the use of special emulsifiers.

US 5,776,536 discloses a reduced fat chocolate comprising de-fatted chocolate and lipid vesicles (50 to 90% by weight),
the lipid vesicles, preferably have 2 to 10 bi-layers surrounding a central cavity and thus comprise a lipid phase (20 -40 weight %) including a surfactant, and an aqueous phase (60 to 80 weight %) which comprises a sweetener.

EP 986 959 discloses a coating for a frozen product, which is a water-in-oil emulsion comprising 60 to 80 weight % of a water phase, 20 to 35 weight % of a fat phase and 0.5 to 8% of an emulsifier. The water phase comprises 10 to 70% carbohydrates.

Other approaches to providing calorie-reduced products include EP 522 704, which discloses a chocolate food product, which has been modified by the inclusion of an aqueous sugar solution of micro particularized cocoa, wherein 100% of the hydrated cocoa particles have a particle size of 0.1 to 20 microns with an average mean particle size of 2 to 7 microns. The hydrated micro particles of cocoa are dispersed uniformly throughout an aqueous sugar paste, so as to provide a cocoa paste having low water content, and which is also low in fat and provides good flavour.

However, none of the attempts described above provide a low-calorie confectionery product having both a rich flavour and a good mouthfeel. In particular, the prior art products lack in texture, melting behaviour, firmness and snapping characteristics. These shortcomings are particularly evident for the prior art chocolate-type products, which lack a texture similar to the texture of regular chocolates and a cocoa flavour similar to the flavour of regular chocolates.

The present invention thus aims at providing a method of making an improved low-calorie confectionery product and the product itself.

According to a first aspect of the invention there is provided a process for producing a confectionery product comprising the step of admixing a structured liquid comprising a thermodynamically stable mixture of water, a surfactant, a co-surfactant and a non-aqueous component with a confectionery mass; wherein the surfactant is a C₂₋₃₆ fatty acid, a glycerol fatty acid ester of a C₂₋₃₆ fatty acid, a polyoxyethylene ester formed from a C₂₋₃₆ fatty acid and a sugar and/or sugar alcohol and having up to 50 ethylenoxide repeat units, a propylene glycol mono- or di-ester of a C₂₋₃₆ fatty acid, a phospholipid, a sugar ester of a C₂₋₃₆ fatty acid, a sugar ether, a polyglycerol ester, a sorbitan ester of a C₂₋₃₆ fatty acid, a polysorbate, or a mixture of any of these;
and
wherein the co-surfactant is one or more esters of a C₁₋₈ carboxlylic acid, the ester moieties comprising a carbon chain having 3-8 carbon atoms; and wherein the structured liquid is in the form of a submicroemulsion, a lamellar structure or a bicontinuous phase, and the structured liquid comprises dispersed droplets having a diameter of less than 10 µm or comprises layers having a thickness of less than 10 µm.

The invention is based on the finding that the use of a structured liquid, as set forth below allows to increase the moisture level in confectionery products and to thereby reduce the caloric value of the product. The structured liquid at the same time allows to achieve textures and flavours that closely match the texture and flavour of non-calorie reduced products. In other words, the structured liquid allows high moisture levels in the confectionery product without destroying the texture and taste. Effectively, the low-calorie structured liquid can thus be used to substitute, in part, high calorie ingredients such as fat and sugar with water. The net result is a lowering of the caloric value of the confectionery product.

The structured liquid according to the present invention has unique properties, which are of great value in producing confectionery products and in particular, chocolate-type products. When trying to incorporate water into chocolate-type products, water will interact with the solids and the net result is an agglomeration, which rapidly leads to an increased viscosity and eventually a chocolate mass that can no longer be processed. For instance, the addition of up to 5% water to a chocolate mass reduces the processing window to less than one minute and necessitates the subsequent removal of the moisture. A level of 5 to 10% water, leads to almost instantaneous firming-up of a chocolate matrix and water levels beyond 10% lead to the development of viscolastic properties which, factually prevent processing of the resulting mass. Such difficulties are not encountered when using the structured liquid according to the present invention.

In the structured liquid as used according to the present invention, the water is not "free", but "entrapped" in a thermodynamically and kinetically stable state. This leads to very beneficial properties such as little or no agglomeration when incorporating the structured liquid into chocolate-type products. The beneficial properties of the structured liquid as used in the present invention are inter alia the result of its special wetting behaviour, namely its ability to spread at the interface between the polar sugar phase and nonpolar trigyceride phase.

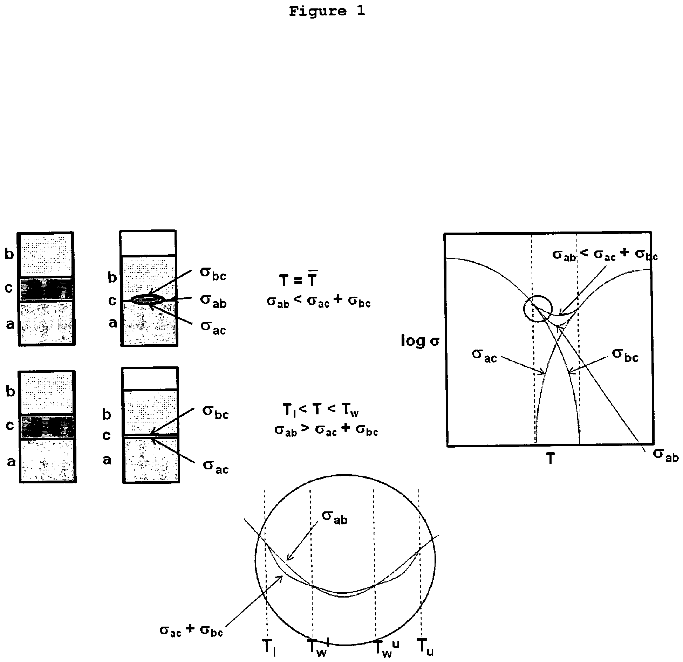

In a particularly useful embodiment these structured liquids penetrate and wet the interface between the macroscopic phases formed by water-wet crystalline sugar and the cocoa butter. In such,a wetting behavior can be determined as shown in Figure 1.

The Figure schematically represents mixtures in a situation of hydrophilic-lipophilic balance. The situation depicted in the upper right shows a structured liquid as the middle-phase c. It is located at and organizes itself at the interface between the water phase a and the oil phase b. If one removes the middle phase, it forms lens at the (a/b)-interface, (left representation). However, if one achieves the appropriate formulation of such a structured liquid can induces a non-wetting to wetting transition as it is depicted at the bottom right. In this case the structured liquid will spread at the interface between the water phase a and the oil phase b.

Moreover, it was found that the structured liquid penetrates the thin sheets between the sugar crystals surrounded by sugar water and the fat component such as cocoa butter. Because of this wetting property, the water is not directly interacting with the solids and no agglomeration takes place. The flow properties of the product mass such as chocolate or chocolate-like product mass are thus not significantly affected by the addition of the structured liquid according to the present invention. Accordingly, moisture levels of more than 10%, while retaining both taste and processability of chocolate or chocolate-like masses are possible. As a result, the caloric value of the products can be reduced, while retaining good processability, taste and texture.

In the present specification and examples, all percentages are expressed by a weight of the final product, unless otherwise noted.

According to the present invention, the low-calorie confectionery product may be a chocolate, a chocolate-like product (e.g., comprising cocoa butter replacers or cocoa butter equivalents), a coating chocolate, a coating chocolate for ice creams, a praline, a chocolate filling, a fudge, a chocolate cream, a refrigerated chocolate cream, an extruded chocolate product or the like. The low-calorie confectionery product may be in the form of an aerated product, a bar or a filling, amongst others. It may also be inclusions, chocolate layers, chocolate nuggets, chocolate pieces, chocolate drops or shaped chocolates. The low-calorie confectionery product may further contain crispy inclusions, e.g., cereals such expanded or toasted rice, or dried fruit pieces). As a rule, these dried fruit pieces need not be coated so as to avoid absorption of moisture from the confectionery product.

This illustrates a further benefit of the present invention. The structured liquid as used according to the present invention leads to a lower water activity of the confectionery product despite a high water content. The low water activity leads to an increased shelf life and to a simplification of the processing and structure of many confectionery products. Because of the low water activity of the confectionery product of the present invention, the need for moisture barriers is greatly reduced if not obviated. That is, in the case where the confectionery product according to the present invention is e.g. a filling it may directly be in contact with chocolate or wafer components without the need of moisture barriers.

Generally speaking, the water activity of the confectionery product according to the present invention is 0,9 or less, preferably 0,8 or less and most preferably 0,7 or less.

In the present specification, the term "non-aqueous component" or "fat-phase" has to be understood as including any solids and/or liquid ingredient mixable with oil or fat, or that has the capacity to dissolve in oil or fat at ambient temperature.

An "aqueous phase" is any solid or liquid ingredient mixable with water, or that has the capacity to dissolve in water at ambient temperature.

Insoluble particles, such as cocoa powder, calcium carbonate, titanium dioxide or particulate starch do not belong to the fat-phase, nor to the aqueous-phase.

Surfactants useful in the structured liquid according to the present invention are inter alia:
saturated or unsaturated fatty acids having 2 to 36, preferably from 6 to 24 and most preferably from 8 to 16 carbon atoms (e.g. oleic acid), the fatty acids according to the invention may have one or more substituents, whereby hydroxyl group substituents are preferred, the fatty acids according to the present invention may also have more than one carboxylic acid group, whereby two or less and in particular only one carboxylic acid group are preferred;
glycerol fatty acid esters, wherein the fatty acid residue is derived from a fatty acid as defined above, including mono- and di-glycerides of the above fatty acids, such as acetic acid esters of monoglycerides, lactic acid esters of monoglycerides, citric acid esters of monoglycerides, succinic acid esters of monoglycerides, diacetyl tartatic acid esters of monoglycerides (e.g. Sugin 471) and diglycerides of the aforementioned carboxylic acids (e.g. Sugin 471);
polyoxyethylene esters of the above fatty acids with sugars and/or sugar alcohols, wherein the esters compris up to 50, preferably 15 to 40 and most preferably 15 to 30 ethyleneoxide repeating units, e.g. sorbitan esters (e.g. Crillet/ Lamesorb SML 20);
propylene glycol mono- or diesters of the above fatty acids;
phospholipids (e.g.Solec CST35);
lecithins (e.g. Solec E-40-B, SE 40), such as enriched lecithins (e.g. solec FP40, high PC soy lecithin), fractionated enzymatic lecithins (e.g. solec E-40-B),enzymatically modified sunflower lecithins (e.g. solec SE40), hydrolysed lecithin (e.g. solec 500-E-M), hydroxylated lecithins (e.g. Solec 8120/8140/8160), and deoiled lecithins;
phosphatides;
sugar esters of the above defined fatty acids (e.g. Sorbester 60/80), especially mono-, di- and tri-esters of sucrose with the above fatty acids, prepared from sucrose and methyl and ethyl esters of the above fatty acids or by extraction from sucroglycerides (e.g. Sisterna L70C, polyglycerol esters, Polyglycerol Polyricinoleate;
sugar ethers;,
polyglycerol esters, especially polyglycerol esters with 3 to 10, preferably 3 to 8 repeating glycerol units and weherin the ester is derived from the above fatty acids;
Polyglycerol-polyricinoleate [PGPR] with 2 to 5 glycerin repeat units and 2 to castor oil-derived fatty acid groups (e.g. Admul WOL 1408/1403, Palsgaard 4125/4150);
Sorbitan esters of the above fatty acids (Sorberster 60 & 80), Polysorbates (ADMUL-T-60-K, ADMUL-T-80-K)and mixtures thereof. Moreover, all esters may included chain fatty alcohols up to (C₁ to C₆) in the ester function,

The surfactants and mixtures thereof as used in the present invention are not limited as long as they are able to form the required structured liquid at a desired temperature upon the addition of co-surfactant. However, it was found that proper mixing of a surfactant of Hydrophilic Lipophilic Balance [HLB]higher than 10, preferably higher than 12 (for example, enriched lecithins, sugar derived surfactants, polyoxyethylene (20) sorbitan mono-oleate, poly-oxy-ethylene (20) sorbitan monostearate.) and a surfactant of Hydrophilic Lipophilic Balance [HLB] lower than 5, preferably lower than 3 (for instance, PGPR or mono-diglycerides) may lead to the desired structured liquid in an appropriate temperature range.

Low HLB (HLB≤5) surfactants can be selected from wide range of polyglycerol polyricinoleate (PGPR; low and high grades) glycerol ester of fatty acids, mono-,diglycerides (sugin series 471), ethoxylated monoglycerides, polyglycerol ester of the above fatty acids, glycerol ester of the above fatty acids, sorbitan esters of the above fatty acids, sucrose esters of the above fatty acids and mixtures thereof.

The high HLB (HLB≥10) surfactants can be selected from acetic acid esters of mono and diglycerides, lactic acid esters of mono and diglycerides, succinic acid esters of mono and diglycerides, diacetyl tartaric esters of mono and diglycerides, polysorbitan esters, polyglycerol esters of the above fatty acids, lecithins, sucrose esters of the above fatty acids and mixtures thereof.

Co-surfactants according to the present invention are n-butyl lactate and other esters of C1 to C8 carboxylic acids, especially naturally occurring acids like citric acid including a carbon chain of more than 3 carbon atoms in the ester function, preferably 3 to 8 carbon atoms. Furthermore mono- and diglycerides may also be used. Sugin 471 PH 60 (mono-, diglycerides of the above fatty acids], Sugin 472c-hi (citric acid esters of mono- and/or diglycerides).

The co-surfactants should be chosen from a low HLB range to act as a counterpart for the preferred lecithin which has a high HLB value.

The amounts of surfactants and co-surfactants depend on the amount of water in the confectionery product. Generally speaking, in the amount of surfactant and co-surfactant should be less than 30, preferably less than 20. most preferably less than 15, or even less than 10%.

The structured liquid used in the present invention is a self-assembling mixture of water, a surfactant, a co-surfactant and a non-aqueous component. Compositions comprising these components lead to supra molecular structures, based on weak interactions. They may take the form of a submicroemulsion, a lamellar structure or a bicontinuous phase. The nature of the structure is of secondary importance and a function of the composition and temperature. For the purposes of the present invention any such self-assembling form is useful.

The supra molecular structures which we refer here to as structured liquids are self-assembling and thermodynamically stable in a strict thermodynamic sense, i.e. they are in the state of lowest Gibbs-free energy. In contrast to conventional emulsions which are only kinetically stable, the structured liquid according to the present invention are thermodynamically stable. Thus, the structured liquid will not decompose, as long as the ingredients themselves do not decompose.

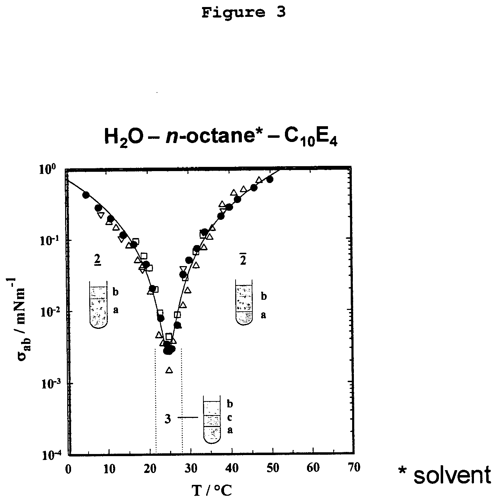

As illustrated in Figure 3, the adsorption of a surfactant and a co-surfactant on the surface of the globules decreases the interfacial tension between oil and water to very low values. In addition, the decrease of the bulk concentrations of the surfactant and co-surfactant decreases their chemical potential both in the bulk and at the interface, thus decreasing the free energy of the system.

On a microscopic scale the main parameter determining the microstructure of a sub-microemulsion is the local curvature of the amphiphilic interfacial film. The other way around, controlling the curvature is the ultimate goal permitting to choose any desired structure. The most important parameter is the spontaneous curvature Ho that the interfacial film adopts if no external forces, thermal fluctuations or conservation constraints exist (R. Strey, Colloid and Polym. Sci. 272, 1005 (1994))

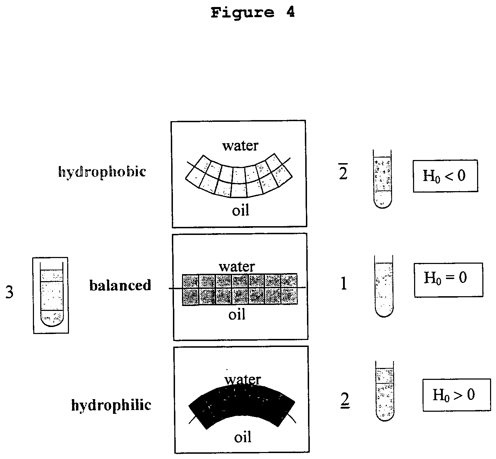

The variation of the phase behavior of a ternary water (A) - oil (B) - non-ionic surfactant (C) system is closely connected to the variation of the spontaneous curvature of a non-ionic surfactant film. When the surfactant is mainly located in the water-rich phase forming oil-swollen micelles with the hydrophobic chains pointing to the inside of the micelles, the amphiphilic film encloses the oil and the spontaneous curvature is counted positive. As a function of the chosen tuning parameter, i.e. temperature or alcohol content, the spontaneous curvature of the amphiphilic film changes gradually from positive to negative. Locally, planar amphiphilic films can be found in the vicinity of the point representing the optimum state of the sub-microemulsion. When the surfactant is mainly located in the oil-rich phase forming water-swollen micelles with the hydrophilic head groups pointing to the inside of the inverse micelles, the amphiphilic film encloses the water and the spontaneous curvature is counted negative. This is illustrated in figure 4.

Their common feature apart from the types of components resides in that the structures, i.e. droplets, layers or bicontinous phases are formed on a sub-micron scale. That is droplet size or layer thickness is below 10µm and preferably below 1µm. Because of this, it is also observed that the structured liquids according to the present invention are usually transparent.

Contrary to e.g. conventional emulsions, which are not transparent, because the droplets are large (typically larger than 10 µm> 1 µm), the structured liquids according to the present invention do no separate upon standing. They are thermodynamically and kinetically stable.

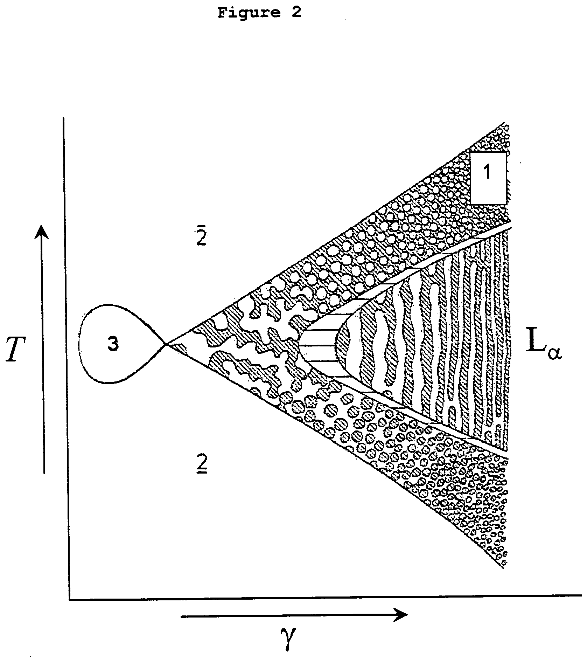

The formation of such structured liquids depends on the temperature and concentration as illustrated in Figure 2

Figure 2 represents a T(γ)-section through a Gibbs phase prism displaying the temperature and composition dependent phase behaviour of a mixture as used for the structured liquids in this invention. Starting at a low surfactant mass fraction γ one observes a two-phase region with monomerically dissolved surfactant. Once enough surfactant is present a three-phase region forms at intermediate temperature, denoted as 3. At lower temperatures a situation denoted as 2 can be observed. In this region a water-continuous phase including oil swollen micelles in coexistence with an oil-excess phase exists. At higher temperatures above the three-phase region an inverse situation denoted as 2 (upper bar) can be observed. Upon further addition of surfactant a one-phase region forms solubilising oil and water completely which is denoted as 1. In this one-phase region a wide variety of different submicron aggregate structures can be found. In the vicinity of the crossing from 3 to 1 bicontinuous sponge-like structures form. If the surfactant content is increased further one can find oil droplets dispersed in a water continuous phase at low and water droplets in an oil-continuous phase at high temperatures. In between those two structures one can observe lamellar sheet-like structures denoted as L_{α}. By varying the surfactant ratio and temperature one can fine-tune the structure as needed.

In order to make a structured liquid one can proceed as follows. In a first step, one defines an oil to oil plus water ratio (by weight) α and an overall surfactant mass fraction γ (γ being the surfactant mass divided by the total sample mass). For the co-surfactant one splits the surfactant mass between the different surfactants by defining a co-surfactant mass fraction δ (δ being the mass of the co-surfactant divided by the total surfactant mass). Upon composing such a system the water to oil ratio can be varied within broad limits, as long as the structured liquid is formed given the ratio and the temperature of choice. Whether or not this is the case needs to be tested experimentally for each composition and temperature. Those skilled in the art can estimate the phase behaviour for a given composition by evaluating a few samples.

Generally speaking, the ratio of water to non-aqueous compound is not limited. However, structured liquids wherein the amount of water is 25%, 20% or 10% and less are preferred.

In the structured liquids as used in the invention, the surfactant is preferably used in an amount of less than 10%, more preferably 3 to 7% and most preferably 5 to 6%, based on the weight of the structured liquid.

The co-surfactant is used in an amount of less than 20%, preferably less than 15% and most preferably between 2 and 12%, based on the weight of the structured liquid.

The ratio of water to surfactant and co-surfactant in the structured liquid is above 1.5, preferably in the range of 3 or higher.

The co-surfactants are used to reduce the amount of the surfactants and to thereby avoid the risk of off-flavours. Thus, by appropriately adjusting the ratio of surfactant to co-surfactant one can reduce the overall amount of surfactant and thus arrive at a favourable taste. In practice, one can determine the level of surfactant and co-surfactant as follows: In order to understand the interactions between surfactant and co-surfactant one has to determine a pseudo-ternary Gibbs phase triangle at a constant temperature (e.g. working temperature) and a constant aqueous to non-aqueous component ratio. Thereby one can analyze the phase behaviour of the surfactant and co-surfactant in question just depending on their relative ratio. Thereby one can locate a region in the triangle that exhibits the required structured liquid and can thus adjust the surfactant to co-surfactant ratio accordingly.

In the structured liquid according to the present invention, it can be beneficial to add sugars, sugar alcohols, polyols and the like. The addition of these compounds is useful to reduce the hydrophilicity and in the case of sugar alcohols, it is also useful to further reduce the caloric value of the confectionery according to the present invention. Preferably, the amounts of such sugars and sugar alcohols are adjusted in such a manner that the amount of necessary co-surfactant can be reduced. Just like co-surfactants they can be used as a temperature tuning agent and thereby control the desired structure in the structured liquid. A temperature tuning agent has the same effect as a hydrophobic co-surfactant (e.g. butyl lactate) when added to a hydrophilic surfactant (e.g. lecithin). It induces phase inversion without changing temperature.

Up to 30 weight-%, preferably up to 25 and most preferably up tp 20% of the aqueous phase can be replaced with the desired sugar / sugar-replacement such as e.g.erythritol. However, using very high amounts of sugar is not desirable as this may increases the caloric value and decrease the amount of water Any sugar (sucrose, polyols etc.)can contribute in changes in the hydrophilic character of the SME/structured liquid and also, it supports the efforts of increase the surfactant efficiency (low overall surfactant level).

While the above general ranges serve as guidance, it is important that the structured liquid according to the present invention is a generally transparent mixture without microscopic phase separation. That is, while microscopically, i.e., on a scale of less than 10 µm or even less than 1 µm, preferably less than 0.1 µm, separate phases may exist (cf. discussion of Fig. 1 above), no phase separation occurs.

The low-calorie confectionery product prepared by the method of the invention may comprise other ingredients, such as flavouring agents, colorants or milk ingredients. The flavouring agents can add coffee flavours or vanilla, raspberry, orange, mint, citrus, strawberry, apricot or lavender flavours, any mixtures thereof and any other fruit, nutty or flour flavouring agent among others. The milk ingredients can be liquid milk or milk powder, either full-fat, partially de-fatted or de-fatted and de-lactosylated or not.

The low-calorie confectionery product may comprise sugars. These sugars include sucrose, fructose, sugar replacers such as polyols (e.g., melted or lactiolisomalt, erythritol, sorbitol, manitol, xylitol) or bulking agents like polydextrose or other sweeteners like tagatose or high-intensity sweeteners like saccharin aspartame, cyclamate or any combination thereof.

The confectionery product may comprise a fat component. This component can be selected from confectionery cocoa butter, cocoa butter substitute, cocoa butter replacers, cocoa butter improvers or cocoa butter equivalents amongst others.

The cocoa butter replacer can be a lauric fat obtained from the kernel of the fruit of palm trees obtain by fractionation and/or hydrogenation of palm kernel oil. It comprises about 55% lauric acid, 20% myristic acid and 7% oleic acid. Cocoa butter substitutes cannot be mixed with cocoa butter. The cocoa butter equivalents are vegetable fats with similar chemical and physical characteristics to cocoa butter, which are obtained by blending different fractions of other fats or by inter-esterification and can be used interchangeably with cocoa butter in any recipe. The cocoa butter replacers are formed by non-lauric vegetable fats, which may be mixed with cocoa butter but only in limited proportions: they have similar physical, but not chemical characteristics to cocoa butter. Cocoa butter replacers can be used in recipes partially based on cocoa mass or cocoa butter.

Cocoa butter improvers are harder than cocoa butter equivalents, which are not only equivalent in their compatibility, but also improve the hardness of some of the softer qualities of cocoa butter.

Generally speaking, the present invention aims at increasing the moisture level in the confectionery product. That is, for instance, the in case where the confectionery product is a chocolate or chocolate-like product, the present invention aims at moisture levels of 30% or less, preferably 20% or less and most preferably 10 to 15%. If the confectionery product according to the present invention is a filing, more than 15, preferably more than 20% moisture are desirable.

It is noteworthy that the preparation of the structured liquid does not require particular equipment, e.g. to effect a high shearing treatment. The structured liquid is a self-assembly system which exhibits thermodynamic and kinetic stability. It thus forms upon simple mixing of the components.

According to the present invention the structured liquid can be admixed to the confectionery mass in a manner known in the art. There is no special limitation as to how the structured liquid should be processed. This is beneficial, as standard processing equipment such as standard mixers and extruders and the like can be used. The incorporation of such the structured liquid into a chocolate matrix or the like food compositions can take place by means of low to gentle mixing. This beneficial aspect is again due to the fact that the water is not free but bound and can be considered as enclosed. Since the structured liquid also acts as lubricant between aqueous and non-aqueous components of the mixture it also adds a rheological improvement in the processing of confectionery mass.

The preferred confectionery product prepared according to the method of the present invention is chocolate or chocolate-like products.

### Examples

### Example 1 - Low-calorie milk chocolate

A low-fat milk chocolate base containing 26% fat and 1% moisture (387 kcal/100g) was admixed with the following structured liquid [intersection of one-phase region and lamellar phase]:
37% : H20,
16% : erythritol,
5% : cocoa butter,
30% : Solec TM8120 (lecithin surfactant)and
12% : butyl lactate.

The structured liquid and the chocolate base were mixed in a standard mixer at 100 rpm for 5 minutes at 30°C. The result was a chocolate matrix of acceptable taste. The matrix contained 30% fat and 10.8% moisture.

The combination of the structured liquid (363 kcal/100g as compared to 550 kcal/100g in case of a standard milk chocolate base) allows to provide a chocolate matrix with standard fat content (30%), yet a significantly lower caloric value.

### Example 2 - Low-calorie milk chocolate

The aforementioned milk chocolate base was admixed under the same conditions with the following structured liquid [lamellar phase].

| | |
|---|---|
| 58.8% | H₂0, |
| 25.6% | erythritol, |
| 8.6% | cocoa butter, |
| 5% | Solec TM8120 (lecithin surfactant) and |
| 2% | butyl lactate |

to obtain a milk chocolate base without off-flavour. The caloric value of the thus obtained milk chocolate base was 341 kcal/100g.

### Example 3 - Dark Chocolate

A dark chocolate base with a fat content of 41% and a moisture content of 0.5% was admixed in standard mixing equipment at 100 rpm for 5 minutes at 31°C was admixed with the following structured liquid [lamellar phase].

| | |
|---|---|
| 58.8% | H₂0, |
| 25.6% | erythritol, |
| 8.6% | cocoa butter, |
| 5% | Solec TM8120 (lecithin surfactant) and |
| 2% | butyl lactate. |

The result was a dark chocolate matrix with less than 30% fat and 22.7% moisture. The dark chocolate matrix had no off-flavours.

Subsequently, the composition was varied and it was noted that in the case where the cocoa butter in the structured liquid is replaced with oil, the final product will show a particularly smooth mouth feel. A similar effect can be achieved by increasing the moisture content in the finished product. Depending on the amount of structured liquid used, the final formulation can be used as a filling of hard, semi-soft or liquid texture.

## Claims

1. A process for producing a confectionery product comprising the step of admixing a structured liquid comprising a thermodynamically stable mixture of water, a surfactant,
a co-surfactant and a non-aqueous component with a confectionery mass;
wherein the surfactant is a C₂₋₃₆ fatty acid, a glycerol fatty acid ester of a C₂₋₃₆ fatty acid,
a polyoxyethylene ester formed from a C₂₋₃₆ fatty acid and a sugar and/or sugar alcohol and having up to 50 ethylenoxide repeat units, a propylene glycol mono- or di-ester of a C₂₋₃₆ fatty acid, a phospholipid, a sugar ester of a C₂₋₃₆ fatty acid, a sugar ether, a polyglycerol ester, a sorbitan ester of a C₂₋₃₆ fatty acid, a polysorbate, or a mixture of any of these;
and
wherein the co-surfactant is one or more esters of a C₁₋₈ carboxlylic acid, the ester moieties comprising a carbon chain having 3-8 carbon atoms; and wherein the structured liquid is in the form of a submicroemulsion, a lamellar structure or a bicontinuous phase, and the structured liquid comprises dispersed droplets having a diameter of less than 10 µm or comprises layers having a thickness of less than 10 µm.

2. A process according to claim 1 wherein the confectionery product comprises chocolate or the confectionery product comprises a chocolate substitute which contains a cocoa butter substitute.

3. A process according to any preceding claim, wherein the phospholipid surfactant is a lecithin.

4. A process according to any preceding claim wherein the co-surfactant comprises n-butyl lactate.

5. A process according to any preceding claim, wherein the non-aqueous component is selected from cocoa butter, a cocoa butter substitute, a cocoa butter replacer, a cocoa butter equivalent, milk fat, a milk fat fraction, confectionery fat and vegetable fat.

6. A process according to any preceding claim, wherein the aqueous component comprises one or more of a sugar, a sugar alcohol, and a polyol.

7. Use of a structured liquid prepared by the method as defined in claim 1 for reducing the calorific value of a confectionery product.

8. Use according to claim 7 wherein the confectionery product is a bar, a filling, a spread or a decorative element.

9. Use according to claim 7 or claim 8 , wherein the confectionery product comprises chocolate.

## Patentansprüche

1. Verfahren zur Herstellung eines Süßwarenprodukts, umfassend den Schritt des Zumischens einer strukturierten Flüssigkeit, umfassend eine thermodynamisch stabile Mischung von Wasser, einem Tensid, einem Cotensid und einem nichtwässrigen Bestandteil, zu einer Süßwarenmasse;
wobei das Tensid eine C₂₋₃₆-Fettsäure, ein Glycerinfettsäureester einer C₂₋₃₆-Fettsäure, ein Polyoxyethylenester, der aus einer C₂₋₃₆-Fettsäure und einem Zucker und/oder Zuckeralkohol gebildet ist und bis zu 50 Ethylenoxid-Wiederholungseinheiten aufweist, ein Propylenglycolmono-oder -diester einer C₂₋₃₆-Fettsäure, ein Phospholipid, ein Zuckerester einer C₂₋₃₆-Fettsäure, ein Zuckerether, ein Polyglycerinester, ein Sorbitanester einer C₂₋₃₆-Fettsäure, ein Polysorbat oder eine Mischung von beliebigen davon ist;
und wobei das Cotensid ein oder mehrere Ester einer C₁₋₈-Carbonsäure ist bzw. sind, wobei die Estereinheiten eine Kohlenstoffkette mit 3-8 Kohlenstoffatomen umfassen; und wobei die strukturierte Flüssigkeit in Form einer Submikroemulsion, einer lamellaren Struktur oder einer bikontinuierlichen Phase vorliegt und die strukturierte Flüssigkeit dispergierte Tröpfchen mit einem Durchmesser von weniger als 10 µm umfasst oder Schichten mit einer Dicke von weniger als 10 µm umfasst.

2. Verfahren nach Anspruch 1, wobei das Süßwarenprodukt Schokolade umfasst oder das Süßwarenprodukt einen Schokoladenersatzstoff umfasst, der einen Kakaobutterersatzstoff enthält.

3. Verfahren nach einem der vorstehenden Ansprüche, wobei das Phospholipid-Tensid ein Lecithin ist.

4. Verfahren nach einem der vorstehenden Ansprüche, wobei das Cotensid n-Butyllactat umfasst.

5. Verfahren nach einem der vorstehenden Ansprüche, wobei der nichtwässrige Bestandteil ausgewählt ist aus Kakaobutter, einem Kakaobutterersatzstoff, einem Kakaobutteraustauschstoff, einem Kakaobutteräquivalent, Milchfett, einer Milchfettfraktion, Süßwarenfett und Pflanzenfett.

6. Verfahren nach einem der vorstehenden Ansprüche, wobei der wässrige Bestandteil einen bzw. eines oder mehrere von einem Zucker, einem Zuckeralkohol und einem Polyol umfasst.

7. Verwendung einer strukturieren Flüssigkeit, hergestellt durch das Verfahren, wie in Anspruch 1 definiert, zum Reduzieren des kalorischen Werts eines Süßwarenprodukts.

8. Verwendung nach Anspruch 7, wobei das Süßwarenprodukt ein Riegel, eine Füllung, ein Aufstrich oder ein dekoratives Element ist.

9. Verwendung nach Anspruch 7 oder Anspruch 8, wobei das Süßwarenprodukt Schokolade umfasst.

## Revendications

1. Processus pour produire un produit de confiserie comprenant l'étape consistant à incorporer un liquide structuré comprenant un mélange thermodynamiquement stable d'eau, d'un agent tensioactif, d'un co-tensioactif et d'une composante non aqueuse à une masse de confiserie ;
dans lequel l'agent tensioactif est un acide gras en C_{2 à 36}, un ester d'acide gras de glycérol d'un acide gras en C_{2 à 36}, un ester de polyoxyéthylène formé à partir d'un acide gras en C_{2 à 36} et un sucre et/ou alcool de sucre et possédant jusqu'à 50 motifs de répétition oxyde d'éthylène, un mono- ou di-ester de propylène glycol d'un acide gras en C_{2 à 36}, un phospholipide, un ester de sucre d'un acide gras en C_{2 à 36}, un éther de sucre, un ester de polyglycérol, un ester de sorbitan d'un acide gras en C_{2 à 36}, un polysorbate, ou un mélange de n'importe lesquels de ceux-ci ;
et
dans lequel le co-tensioactif est un ou plusieurs esters d'un acide carboxylique en C_{1 à 8}, les fragments ester comprenant une chaîne carbonée comportant 3 à 8 atomes de carbone ; et dans lequel le liquide structuré est sous la forme d'une submicroémulsion, d'une structure lamellaire ou d'une phase bicontinue, et le liquide structuré comprend des gouttelettes dispersées ayant un diamètre inférieur à 10 µm ou comprend des couches possédant une épaisseur inférieure à 10 µm.

2. Processus selon la revendication 1, dans lequel le produit de confiserie comprend du chocolat ou le produit de confiserie comprend un substitut de chocolat qui contient un substitut du beurre de cacao.

3. Processus selon l'une quelconque des revendications précédentes, dans lequel l'agent tensioactif phospholipide est une lécithine.

4. Processus selon l'une quelconque des revendications précédentes, dans lequel le co-tensioactif comprend du lactate de n-butyle.

5. Processus selon l'une quelconque des revendications précédentes, dans lequel la composante non aqueuse est choisie parmi du beurre de cacao, un substitut du beurre de cacao, un succédané du beurre de cacao, un équivalent du beurre de cacao, de la matière grasse de lait, une fraction de matière grasse de lait, une matière grasse de confiserie et une matière grasse végétale.

6. Processus selon l'une quelconque des revendications précédentes, dans lequel la composante aqueuse comprend un ou plusieurs parmi un sucre, un alcool de sucre et un polyol.

7. Utilisation d'un liquide structuré préparé par le procédé selon la revendication 1 pour réduire la valeur calorifique d'un produit de confiserie.

8. Utilisation selon la revendication 7, dans laquelle le produit de confiserie est une barre, un fourrage, une pâte à tartiner ou un élément décoratif.

9. Utilisation selon la revendication 7 ou la revendication 8, dans laquelle le produit de confiserie comprend du chocolat.
